# EUROPEAN PATENT APPLICATION

(11) **EP 2 141 943 A1**
(43) Date of publication of application: **06.01.2010**
(21) Application number: 08104624.5
(22) Date of filing: 03.07.2008
(51) Int. Cl.: H04W 4/02

(54) **Control of data for output**

(71) Applicant: Nokia Siemens Networks OY, 02610 Espoo (FI)
(72) Inventor: The designation of the inventor has not yet been filed
(74) Representative: Bruglachner, Thomas E.

(57) **Abstract**

Methods and systems for controlling the output of advertisements and the like are described. A location based service is used to identify subscribers of mobile communication devices located in the vicinity of a display (10, 10'). Subscriber related information of the identified mobile communication device subscribers is obtained from a database (16, 16') and a controller (18, 18') selects material to be output depending on the subscriber related information of the identified subscribers.

## Description

The present invention is related to the control of data for output, particularly, although not exclusively, data for output in public spaces.

Advertising in public spaces, for example using billboards alongside a road, is well-established. A problem with such advertising is that it is inherently static. More dynamic advertising can be provided by replacing paper-based billboard advertising with advertising displays that can be used to display changing and/or moving images. Such advertising displays, which are becoming increasingly common at shopping centres, railway stations, airports and the like are sometimes able to receive data and display that data in the form of images (and possibly also sound) in a similar manner to a standard television. Advertisements displayed on such screens can be made location and time dependent, so that appropriate material is displayed at appropriate locations and/or times.

To the extent that they receive data at all, prior art systems are typically only able to display advertisements as they receive them from a central location. Such arrangements do not seek to interact with the individuals viewing the advertisements.

A number of systems have been considered for improving on the prior art advertising systems referred to above.

By way of example, WO 2004/109578 describes an intelligent display device including a display screen controlled by a controller. Sensors provide environmental data for the controller; such sensors might include motion detectors, temperature sensors, sound sensors, cameras, humidity sensors, light sensors, and the like. Other inputs might provide position and time data. The controller uses data from the sensors when selecting advertisements for display. In this manner, the displayed advertising can be dynamically controlled on the basis of characteristics such as time of day, season and environmental conditions.

US 6,698,020 describes a system for selecting and inserting advertisements into a video programming feed at a household level. The selection can made based on a variety of different selection criteria. Possible selection criteria include: demographic data relating to the household; the geographical location of the household; individual viewing habits; and viewer responses to previous advertisements. Such an arrangement enables advertisements to be directly tailored to the householder(s).

Both WO 2004/109578 and US 6,698,020 propose providing some form of user interface. By way of example, WO 2004/109578 discloses the provision of soft keys to enable a viewer to respond to advertisements and US 6,698,020 proposes the use of a login arrangement to identify individual viewers. However, such mechanisms require the active participation of viewers.

The present invention seeks to address at least some of the problems outlined above.

The present invention provides a content delivery system comprising: a controller configured to control an output device; an identification module configured to identify subscribers of mobile communication devices located in the vicinity of the output device; a database for storing subscriber related information (such as subscriber interests data); and means for interrogating the database to determine subscriber related information of the identified mobile communication device subscribers, wherein the controller is configured to select the output of the output device depending on the subscriber related information of the identified subscribers.

The output device may be a media device, for example providing audio and/or visual output. In one form of the invention, the output device is a display, such as a television screen. The output device may be used to output advertising material.

The identification module may be implemented as two separate modules: one for identifying mobile communication devices in the vicinity of the output device and the other for identifying the subscribers of the identified mobile communication devices. In one form of the invention, the identification module is a location based service module.

The present invention also provides a method of controlling a output device (for example a display, such as a television screen), the method comprising the step of selecting material to be output by said output device depending on subscriber related information (such as user interests data) of subscribers of mobile communication devices identified as being in the vicinity of the output device. The output device may be used for providing advertising material, for example in audio and/or visual form.

The present invention further provides a data processing module configured to: receive data concerning the identity of subscribers of mobile communication devices that are located in the vicinity of an output device; receive subscriber related information (such as user interests data) for the identified subscribers; and provide data concerning the subscriber related information to a controller for use in selecting material for output by the output device. The output device may be a media device, for example providing audio and/or visual output. In one form of the invention, the output device is a display, such as a television screen. The output device may be used to output advertising material.
The data processing module may include means, such as a location based service module, for identifying mobile communication devices in the vicinity of the output device.

The present invention yet further provides a communications system comprising a content delivery system as set out above and further comprising a mobile communication system for communicating with a plurality of mobile communication devices and for interfacing with the content delivery system.

The present invention also provides a computer program product configured to: receive data concerning the identity of subscribers of mobile communication devices that are located in the vicinity of an output device; receive subscriber related information for the identified subscribers; and provide data concerning the subscriber related information to a controller for use in selecting material for output by the output device. The output device may be a media device, for example providing audio and/or visual output. In one form of the invention, the output device is a display, such as a television screen. The output device may be used to output advertising material. The computer program product may be configured to process the subscriber related information such that the data provided to the controller are processed data.

The inventor has realized that a problem with the prior art arrangements described above is the lack of information regarding the potential recipients of advertising or other material. The present invention addresses this problem by detecting the presence of mobile communication devices, such as mobile telephones, in the vicinity of an advertising display or some other output device.

Herein, in order for a mobile communication device to be in the vicinity of the output device, the mobile communication device should be in a position such that the subscriber of the device (assuming they are at the same location) would be able to receive data from the output device. For example, in the case of a visual display, the mobile communication device should be in a position such that the subscriber of the device would be able to view the display. Thus, there would be a realistic prospect of the subscriber viewing or otherwise receiving any advertising or other material output using the output device. Accordingly, the present invention provides methods and systems for determining subscribers who are in a position to receive material output under the control of the method or system, and then outputting appropriate material (such as advertising) using that output device (for example by displaying material on a display).

By way of example, in one embodiment of the invention, a subscriber is deemed to be in the vicinity of an output device if the subscriber's mobile communication device is within 10 metres of the output device. In another embodiment of the invention, a subscriber is deemed to be in the vicinity of the output device if the subscriber is located both on the primary output side of the output device and within 10 metres of the output device. Of course, different distances could be specified. Further, the distance might not be a constant; for example, the distance might be dependent on the angle of the subscriber relative to the output device and/or might be an irregular shape, for example to take account of viewing obstructions.

A processor may be provided that is configured to process the subscriber related information of the identified mobile communication device subscribers and to provide processed data to the controller. The processor may, for example, be configured to receive data concerning the identity of subscribers of mobile communication devices that are located in the vicinity of the output device and to receive the subscriber related information and to provide data concerning the subscriber related information of the identified subscribers to the controller for use in selecting material for output.
The processor may be a statistical analyzer.

In one form of the invention, the processor has a first input for receiving data concerning the identity of mobile communication device subscribers in the vicinity of the output device, a second input for receiving subscriber related information (such as subscriber interests) and an output for providing data (e.g. statistical data) concerning the subscriber related information to a controller for use in determining appropriate material for output.

The processor and the controller may be two separate modules of the system of the present invention. Alternatively, a single controller module may be provided that implements both the processing and control functions outlined above.

In many forms of the invention, a mechanism is provided for identifying the subscriber related information of the subscribers of said mobile communication devices. This mechanism may comprise interrogating a database. The processor described above may be provided with means for interrogating such a database. In many forms of the invention, the subscriber related information comprises subscriber interests data. The database may, for example, be a Home Location Register (HLR) or a Visitor Location Register (VLR).

The invention may also comprise populating said database with user interest data obtained from subscribers of one or more of said mobile communication devices. The database may, for example, be a Home Location Register (HLR) or a Visitor Location Register (VLR).

The various elements of the invention may be provided at different locations. For example, a controller may be provided at the same location as the output device, a processor may be provided at the location of the output device or could be provided at a service provider's premises, for example as part of an application server. A database might be stored at the service provider's premises or might be provided as part of a mobile communication system. A location based service module might be provided as part of the mobile communication system.

In one form of the invention, the output device is used to output advertising material, for example by displaying advertising material on a display and/or outputting advertising material is audible form. Other forms of information could be provided; by way of example television programs and/or music videos could be displayed or radio or other audio programs could be output. The selection of the programs, videos or other material for output may be dependent on the interests of the potential viewers in the vicinity of the output device.

The present invention will now be described, by way of example only, with reference to the following numbered drawings.
Figure 1 is a block diagram of a system in accordance with an aspect of the present invention;
Figure 2 is a block diagram showing a detail of the system of Figure 1; and
Figure 3 is a block diagram of a variant of the system of Figure 1.

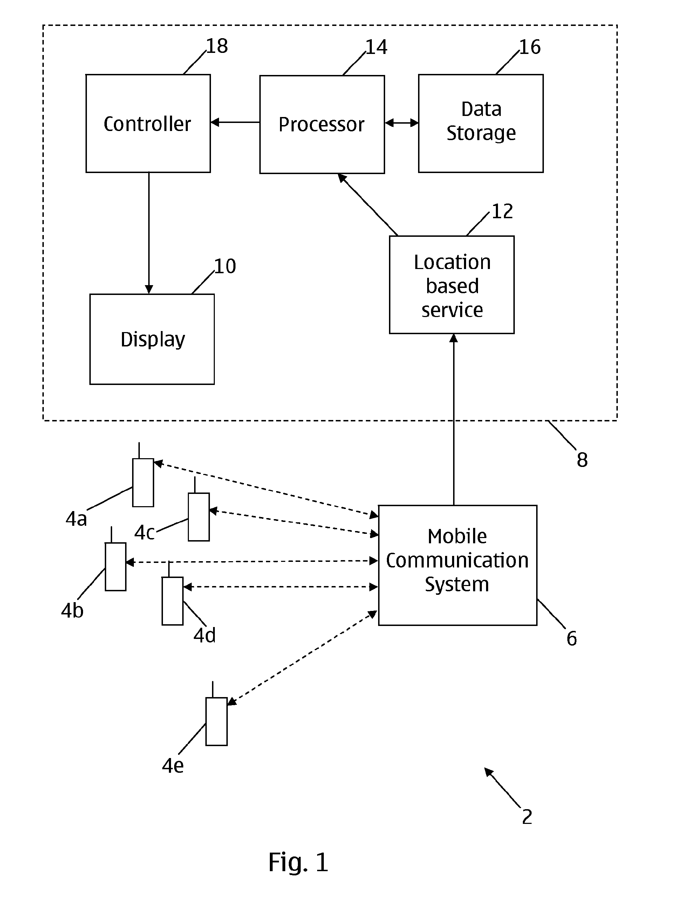

Figure 1 shows a system, indicated generally by the reference numeral 2, in accordance with an aspect of the present invention. The system 2 comprises a plurality of mobile communication devices 4a, 4b, 4c, 4d and 4e, a mobile communication system 6 and content delivery system 8.

The mobile communication system 6 can take a variety of forms and is the mechanism by which the mobile communications devices 4a to 4e communicate with each other and with the outside world. The mobile communication system 6 communicates with the mobile communication devices 4a to 4e via a basesta-tion (not shown) and is coupled to the content delivery system 8 of the present invention.

The content delivery system 8 comprises a display 10, a location based services module 12, a processor 14, a data storage device 16 and a controller 18.

The storage device 16 is a database storing information relating to the interests (such as books, apparel, travel, electronic goods, music etc.) of mobile communication device subscribers. This information may, for example, be collected at the time of providing a new subscriber account. Alternatively, or in addition, this information may be collected during customer management, for example by contacting the subscriber either by telephone or SMS. Data concerning user interests might typically be stored in a Home Location Register (HLR). Indeed, the storage device 16 may be a Home Location Register.

The location based services module 12 provides data identifying the mobile communication devices 4a, 4b, 4c, 4d and 4e in the vicinity of the display device 10. This is achieved by determining the identifiers of the mobile devices that are in the vicinity of the display 10.

There are a variety of ways of determining whether a mobile communication device is in the vicinity of the display. In essence, a mobile communication device is in the vicinity of the display if the device is located in a position where the user of the device (assuming that the user is in the same position as the device) is likely to be able to view any advertising material display on the display. This could be defined as a distance, e.g. within 10 or 20 metres of the screen. The distance may be angle dependent, since people at right angles to the screen might be able to view the screen well from a further distance than people at a shallow angle to the screen. Also, the display may be unidirectional, so that people behind the screen are unable to see it and are therefore not considered to be in the vicinity of the display.

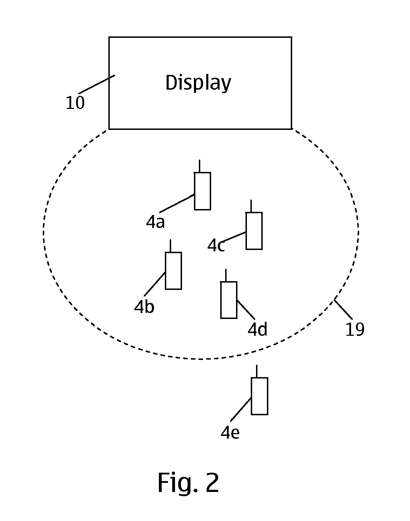

By way of example, Figure 2 shows the display 10 and the mobile communication devices 4a, 4b, 4c, 4d and 4e. Of the mobile communication devices, devices 4a, 4b, 4c and 4d are within a zone 19 and device 4e is outside that zone. All the devices within the zone 19 are deemed to be in the vicinity of the display 10. Thus, only the devices 4a, 4b, 4c and 4d are considered to be in the vicinity of the display 10. It should be noted that the zone 19 could take any shape. For example, the zone 19 might be shaped to avoid an obstacle that would impede the view of a potential viewer.

There are a variety of mechanisms by which it is possible to determine the position of a mobile communication device relative to a fixed position, such as the position of the display 10. By way of example, the Location services functionality in a number of known Radio Network Controllers (RNC) has the capability to find out the location of a particular user device in the base transceiver station (BTS) related to the particular RNC. This capability can be extended for the purposes of the present invention to find out the identities of the user devices within a particular area, i.e. in the vicinity of the display device 10.

Many methods for determining the positions of mobile communication devices perform position estimate computation based on radio signal measurements. Exemplary functional specifications for suitable location based services modules are described in detail in the specification 3GPP TS 23.271 (available from www.3gpp.org). Further, the specification 3GPP TS 23.205 (also available from www.3gpp.org) specifies a number of methods for determining the position of mobile communication devices and the like. A number of suitable location based services modules are commercially available.

The location based services module 12 provides data identifying the mobile communication devices 4a to 4d (since, as noted above, the mobile communication device 4e is deemed not to be in the vicinity of the display device 10) to an input of the processor 14. The processor 14 obtains data concerning the interests of the subscribers of those communication devices by interrogating the storage device 16.

The processor 14 maps the interests of each subscriber present in the subscriber database stored at the storage device 16 with the subscriber identities obtained by the location based service 12. Data are then generated identifying the number of people in the vicinity of the display 10 having particular interests. These data are passed to the input of the controller 18, which controller uses the data to determine the advertising content for display on the display device 10. In this way, the advertising material displayed can be tailored to the subscribers in the vicinity of the display device 10.

By way of example, consider the scenario in which 55 mobile communication devices (and their users) are located in an area within 10 metres of a plasma television that is being used to display advertisements (and is therefore the display 10 of Figure 1). Assume now that of those 55 subscribers, 32 have indicated an interest in clothes/accessories, 10 have expressed an interest in music, 8 have expressed an interest in electronic goods and 5 have expressed an interest in books. This information is collated by the processor 14 and is supplied to the controller 18. In response to this information, the controller may determine that any advertisements relating to clothes/accessories should be displayed and only when those have all been displayed, advertisements relating to music should be displayed. Alternatively, the relative quantity of types of advertising might be weighted. For example, in the present scenario, the advertisements might be selected such that, over a given period of time, three times as many advertisements relating to clothes/accessories are displayed than advertisements relating to music.

The steps of identifying the subscribers in the vicinity of the display 10, obtaining interest data concerning those subscribers and analyzing the interests data should ideally be repeated periodically (such as, for example, once every 5 minutes) in order to take account of the movement of subscribers towards and away from the display 10. Of course, the data could be updated more or less often (perhaps every 10 minutes or every 2 minutes). The updating period may be adjustable and might, for example, be dependent on the rate at which potential viewers of advertising material are likely to move into or out of the vicinity of the display.

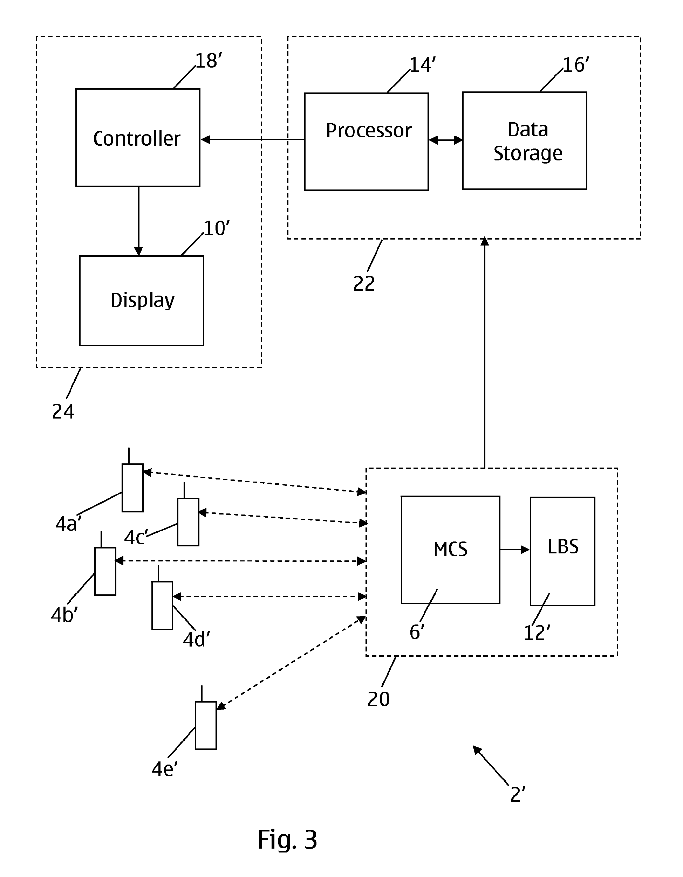

The invention as described above includes a content delivery system 8 that is separate from the mobile communication system 6. This is not essential. Figure 3 shows a system, indicated generally by the reference numeral 2' demonstrating a variant of the system 2.

The elements of the system 2' are similar to the elements of the system 2 described above, but the organisation of the systems is different. The location based service module 12' is similar to the module 12 of Figure 1, but is now provided as part of a mobile communication system 20 that also includes the features of the mobile communication system 6 of the system 2 of Figure 1. The storage device 16' and processor 14' are provided as a separate module, indicated by the reference numeral 22, that could be located at a service provider's premises and used to send the processed data to a display module 24 possibly located at a customer's premises (e.g. shopping mall, airport etc.). The display module 24 includes a controller 18' and display device 10'. The processor 14', storage device 16' and controller 18' are similar (possibly identical) to the processor 14, storage device 16 and controller 18 described above.

In an alternative arrangement, the storage device, processor, controller and display device are all located at the customer's premises. The location based services module may also be located at the customer's premises.

However the system is organised, it should be noted that the system can be implemented largely using elements of existing mobile communication systems; for example, the storage devices 16 and 16' may be home location registers of known mobile communication systems and many such communication systems include functionality that could be used to implement the location based service modules 12 and 12'.

In the examples discussed above, the processors 14 and 14' simply determine the number of subscribers that have indicated a particular interest. The statistical analysis performed could, of course, be much more sophisticated than that. The processors 14 and 14' might also determine the most displayed advertisements in a given period of time and instruct the controller to display those advertisements in the event that no mobile communications devices are located in the vicinity of the display.

In the examples described above, the processors and the controllers are separate modules, possibly provided in different locations. This is not an essential requirement of the present invention. The processor and controller could be combined in a single controller module that receives data from the location based service module, obtains and processes subscriber data stored at the database, and controls the display.

The specific embodiments of the invention described above include the use of a display. This is not an essential requirement of the invention. By way of example, other devices, including other media devices, could be used to output material, such as advertising material, to mobile communication subscribers in the vicinity of the output device.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

## Claims

1. A content delivery system comprising:
a controller configured to control an output device;
an identification module configured to identify subscribers of mobile communication devices located in the vicinity of the output device;
a database for storing subscriber related information; and
means for interrogating the database to determine subscriber related information of the identified mobile communication device subscribers,
wherein:
the controller is configured to select the output of the output device depending on the subscriber related information of the identified subscribers.

2. A content delivery system as claimed in claim 1, further comprising a processor configured to process said subscriber related information of the identified mobile communication device subscribers and to provide processed data to said controller.

3. A content delivery system as claimed in claim 2, wherein said processor comprises the said interrogation means.

4. A content delivery system as claimed in any one of claims 1 to 3, further comprising the said output device.

5. A content delivery system as claimed in any preceding claim, wherein said output device is a display.

6. A communication system comprising a content delivery system as claimed in any preceding claim and further comprising a mobile communication system for communicating with a plurality of mobile communication devices and for interfacing with the content delivery system.

7. A method of controlling an output device, the method comprising the step of selecting material to be output by said output device depending on subscriber related information of subscribers of mobile communication devices identified as being in the vicinity of the output device.

8. A method as claimed in claim 7, further comprising the step of identifying mobile communication devices in the vicinity of the output device.

9. A method as claimed in claim 8, wherein said step of identifying mobile communication devices in the vicinity of the output device comprises using a location based service module.

10. A method as claimed in any one of claims 7 to 9, further comprising the step of identifying the subscriber related information of the subscribers of said mobile communication devices.

11. A method as claimed in claim 10, wherein the step of identifying the subscriber related information of the subscribers of said mobile communication device comprises interrogating a database of subscriber related information.

12. A method as claimed in any one of claims 7 to 11, wherein the subscriber related information comprises subscriber interests data.

13. A method as claimed in claim 12 when dependent on claim 11, further comprising the step of populating the said database with subscriber interests data obtained from subscribers of one or more of said mobile communication devices.

14. A method as claimed in any one of claims 7 to 13, further comprising the step of processing said subscriber related information for use in selecting said material to be output using said output device.

15. A data processing module configured to:
receive data concerning the identity of subscribers of mobile communication devices that are located in the vicinity of an output device;
receive subscriber related information for the identified subscribers; and
provide data concerning the subscriber related information to a controller for use in selecting material for output by the output device.

16. A data processing module as claimed in claim 15, wherein the data processing module is configured to interrogate a storage device in order to obtain the subscriber related information.

17. A data processing module as claimed in claim 15 or claim 16, wherein the identity of subscribers of mobile communication devices that are located in the vicinity of the output device is determined from data received from a location based service module.

18. A data processing module as claimed in any one of claims 15 to 17, further comprising a controller configured to control the output device depending on the subscriber related information.

19. A data processing module as claimed in any one of claims 15 to 18, wherein the data provided to the controller are statistical data concerning the identified subscribers.

20. A computer program product configured to:
receive data concerning the identity of subscribers of mobile communication devices that are located in the vicinity of an output device;
receive subscriber related information for the identified subscribers; and
provide data concerning the subscriber related information to a controller for use in selecting material for output by the output device.
